(19) Europäisches Patentamt
European Patent Office
Office européen des brevets

(11) **EP 2 418 889 A1**

(12) **EUROPEAN PATENT APPLICATION**

(43) Date of publication:
**15.02.2012 Bulletin 2012/07**

(51) Int Cl.:
***H04W 24/02*** *(2009.01)*

(21) Application number: **10360031.8**

(22) Date of filing: **22.07.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(71) Applicant: **Alcatel Lucent**
**75007 Paris (FR)**

(72) Inventors:
• **Portolan, Michele**
  **Blanchardstown Dublin 15 (IE)**
• **Cherubini, Davide**
  **Castleknock**
  **Co. Dublin (IE)**

• **Claussen, Holger**
  **Straffan**
  **Co. Kildare (IE)**

(74) Representative: **Coghlan, Judith Elizabeth Kensy et al**
  **Bryer, Shelley, John Amor, Greenwood LLP**
  **7 Gay Street**
  **Bath BA1 2PH (GB)**

Remarks:
Amended claims in accordance with Rule 137(2) EPC.

(54) **Telecommunications network node and methods**

(57)  A network node is operable to generate, by adaptive programming, an algorithm for adjusting deployed base station operating characteristics to assist in providing desired base station operating characteristics. The network node comprises determining logic operable to determine at least one deployed base station operating condition; model creation logic operable to create a model of at least one indication of deployed base station operating environment from the determined deployed base station operating condition; generation logic operable to generate at least one algorithm which determines whether to adjust the deployed base station operating characteristics for any particular base station operating environment; and assessment logic operable to assess performance of said generated algorithm's ability to adjust said deployed base station operating characteristics towards said desired base station operating characteristics using said created model of deployed base station operating environment and determine whether a desired performance level has been achieved.

FIGURE 9A

EP 2 418 889 A1

**Description**

FIELD OF THE INVENION

The present invention relates to a telecommunications network node and methods.

BACKGROUND

Telecommunications networks increasingly incorporate abilities to self-configure, self-organise and self-adapt. As the size and complexity of telecommunications networks increases, there is a drive to implement such so called "self-x" properties in a decentralised manner, namely in a manner in which each node can act individually using only locally available information.

Accordingly, there is a growing need to develop self-x algorithms, that is to say algorithms for network node self adaptation which work without being provided with global information about the network and without coordinated central control of network nodes.

Self-x algorithms may be designed by skilled engineers, based on specific assumptions about the network that may not be realistic. As a result, there is often a need for the algorithms to be evaluated, revised and refined after they have been implemented in real life networks. The evaluation process can be slow and expensive.

The algorithms are typically designed based on specific assumptions about a network that often do not hold true in a real world scenario.

Self-x algorithms may be designed manually and then that same algorithm may be applied across all of the network nodes of a certain type, for example, all of the base stations in a wireless cellular network. Since there are large differences in operating environments of the nodes, performance overall is likely to be degraded as a result of generally-applicable optimisation algorithms performing less well than algorithms that are more specialised to a particular problem or operating environment.

In order to test the performance of a self-x algorithm, a model of the real world environment surrounding a base station is typically required. Construction of those real world models is typically time consuming and expensive. That is to say, a major limitation of known techniques is the environment model. In order to obtain results and algorithms which are optimised for a specific deployment scenario, a high level of information regarding the surrounding environment is required. Such information is difficult and time expensive to collect: for instance, in order to obtain an estimate for the average overlap of neighbouring cells in a wireless telecommunication network, one needs, in addition to the base station configuration: a precise map of the area; knowledge of all construction materials and relative propagation behaviour; and information regarding a wave propagation model including, for example, attenuation effects, interference, multiple path effects and so on.

User mobility is another determining factor in the accuracy of the real world modelling process. The same geographical scenario, for example, a building can have different optimal solutions depending on the number of users and their mobility patterns.

One issue with telecommunication networks is therefore the manner in which a network node may be operable to automatically build and adapt models for relevant parameters in the objective function that can be computed and evolved based only on information that can be directly measured or computed by the network node itself, either independently or in cooperation with other network nodes. Such models allow an automatic evolution process to test offline new generations of algorithms using models that represent in an abstract manner the environment within which the network node may be deployed. As a result, developed self-x algorithms may be highly optimised for each specific deployment.

It is desired to provide an improved self-optimising base station.

SUMMARY

Accordingly, a first aspect provides a network node operable to generate, by adaptive programming, an algorithm for adjusting deployed base station operating characteristics to assist in providing desired base station operating characteristics; the network node comprising:

determining logic operable to determine at least one deployed base station operating condition;
model creation logic operable to create a model of at least one indication of deployed base station operating environment from the determined deployed base station operating condition;
generation logic operable to generate at least one algorithm which determines whether to adjust the deployed base station operating characteristics for any particular base station operating environment; and
assessment logic operable to assess performance of the generated algorithm's ability to adjust said deployed base station operating characteristics towards said desired base station operating characteristics using the created model of deployed base station operating environment and determine whether a desired performance level has been achieved.

The first aspect recognises that allowing a network node to model its surrounding environment at different levels of an abstraction may provide various advantages coupled with disadvantages. Typically, modelling at a high level of abstraction provides less information relating to the detailed operation of the network that is to say the model of the surrounding environment may be particularly simple. However, that model will typically execute relatively quickly. Modelling at a lower level of abstraction provides more information regarding the precise form of the environment but such models typically take much longer to execute. In a development environment, such as a self-x algorithm environment, it is often the case that the operation of a data processing apparatus such as a network node, needs to be fast and needs to be characterised following a proposed modification of the self-x algorithm.

Accordingly, a network node is operable to self optimise. Self optimising networks include base stations which can self adapt to a particular environment. In order to self adapt, those base stations implement adaptive programming methods. Automated algorithm design approaches, utilising adaptive programming allows a self management algorithm itself to be adapted to the actual environment in which a base station is placed. In one embodiment, the adaptive programming comprises genetic programming. Genetic programming is an evolutionary computation technique used to evolve algorithms to perform a certain task. It may, for example, and as described in more detail below be used to automatically create algorithms for distributed coverage optimisation. Although genetic programming is proposed in one embodiment it is also possible to use various other adaptive programming approaches including, for example, incremental, heuristic, evolutionary and machine learning adaptive programming approaches. In each case an algorithm produced by an adaptive programming technique may be used to compute a value of a given objective function, or "performance" function. That function estimates the goodness or fitness or appropriateness of the obtained algorithm in terms of effectiveness of a new adaptation step. An objective function is usually computed by analysing or using a model of the surrounding environment (both physical and mobility aspects) so the form of that model is of paramount importance to the effectiveness of the adaptive programming technique.

The first aspect recognises that creation of a model from directly measurable characteristics and base station operating conditions allows production of a simple and relevant model from the outset of deployment of a new base station. Such an approach reduces the need to provide a detailed model on commissioning a new base station and allows the advantages of a self optimising network algorithm without having to use predefined self optimising network algorithms designed for general cases in a small cell scenario. Use of a detailed pre-calculated environment model would be prohibitively expensive in a small cell environment. It will be appreciated that in order to provide a complete model and in order to obtain results that are optimised for a specific deployment scenario, a high level of information on the environment is required. Such information is difficult and time expensive to collect, for instance in order to obtain and estimate of the coverage overlap of neighbouring cells one needs, in addition to the base station configuration, a precise map of the area, and knowledge of all construction materials and relative propagation behaviour and an appropriate wave propagation model which accounts for attenuation interference and multiple path effects. Furthermore, user mobility is another determining factor in the modelling process, the same geographical scenario can have different optimal solutions depending on the number of users and of their mobility patterns.

The first aspect recognises that it is advantageous to be able to automatically build and adapt models for relevant parameters in an objective function to be used in adaptive programming that can be computed and evolved based only on information that can be directly measured or computed by a network node itself, either independently or in cooperation with other network nodes in the surrounding area. The simplified environment model allows an automatic evolution process to test off line new generations of algorithms using models that represent, albeit in a simplified manner, the environment of the deployment. As a result, evolved algorithms can be highly optimised for each very specific deployment. The first aspect enables the automatic generation of an abstract model and the adaptation of that abstract model to the environment in which the cell is deployed based on available measurements. Thereby allowing appropriate self learning and self evolving coverage optimisation algorithms to be effectively and efficiently generated by an adaptive programming technique.

In one embodiment, the modelling logic is operable generate an equivalent environment model in the form of a directed graph G(N,A) composed of N nodes and A arcs.

A graph model can be used to successfully model a variety of parameters within a telecommunications network including, for example, cell overlap and user mobility characteristics. Those parameters may, in combination, or by themselves be required for the automatic evolution, by adaptive programming, of self-x algorithms in autonomous networks. Use of such a simplified model allows on the one hand both more iterations to be computed by a network node, thereby correcting the simplification error introduced by such an abstract model, and allows enough computational resource to adapt the model itself so that over time it becomes more precise.

In one embodiment, each node represents a network node, one of which is the deployed base station, and each network node is associated with one or more node attribute, indicative of deployed base station operating environment.

In one embodiment, the node attributes comprise one or more of: number of users connected to the network node, number of users leaving the network node, transmission power of the network node, number of network node detected dropped calls, network node traffic characteristics.

In one embodiment, the network nodes are connected by one or more directed arcs each being associated with one or more arc attribute, indicative of deployed base station operating environment.

In one embodiment, the arc attributes comprise one or more of: equivalent distance between network nodes, real distance between network nodes, number of network node neighbours, number of users flowing between network nodes, overlapping coverage area along the arc.

Accordingly, a mathematical graph representation of a real life environment allows for simplified computation of improvements in base station operating characteristics in accordance with generated algorithms. Furthermore the mathematical graph representation can be easily adapted and can be utilised for a variety of operating conditions and a variety of operating environment modelling options. For example, it will be appreciated that the mathematical graph model may be used for both physical environmental modelling and user mobility modelling. Graphs may also allow for modelling of systems which are not symmetric since propagation of radio waves between points in a telecommunications network may be asymmetrical due to a series of physical affects for example multiple paths reflection and polarisation. Use of the graph allows for that asymmetry to be modelled and also allows the model to reflect complete lack of conservation of topology. Algorithms can be applied to a graph and those solutions can then be applied to the real system. The values computed from the abstract model represented by the graph typically have a high error margin and their absolute value can be far from a real one. Nonetheless, the abstract model can show the same trend as a real system thereby allowing trends in the performance or fitness function or objective value to mirror those of the real life environment. As a result the adaptation offered by generation of new algorithms, can be driven in the same direction, that is towards desired base station operating characteristics, but based on much simpler computations according to the equivalent graph model.

In one embodiment, the determining logic is operable to determine one or more parameters related to user mobility within an area served by the deployed base station.

A special case of abstract modelling according to embodiments is the modelling of user mobility. The behaviour of users within a telecommunications network can be a determining factor for reaching an optimal solution. Traditional schemes use a priori mobility models for users, which are computed to move within the physical scenario and then used to measure parameters needed for calculation of an objective function or performance function. As has been described previously, in a small cell deployment there is typically little knowledge of the real environment so it can be difficult to determine which a priori mobility model may match a problem better.

Accordingly, it has been recognised that cells and network nodes have the capability to measure a number of parameters directly linked to user mobility such as the number of users in said area served by said deployed base station, number of users entering said area, number of users leaving said area, number of users leaving said area and entering an area served by a particular other network node.

According to an abstract model, those parameters can be used to build a mobility model adapted to a real scenario. Mathematical techniques can be used, including statistical analysis, machine learning, and pattern recognition, depending on the available computational power and required precision.

One embodiment of a mobility model would be to estimate the probability of having a hand over from a first cell to a second cell at a particular time. In the simplest case, that information can be obtained by collecting hand over information and drop call history information over a period of time and extracting relative probability distributions including occurrence and variance which can be used to recreated basic user behaviourable patterns.

In one embodiment, the model creation logic is operable to create a mobility model indicative of the deployed base station operating environment.

Accordingly, it will be appreciated that information on the degree of each base station or network node within a communication network can be used to calculate for example probability distribution of all possible next cells, and therefore identifying the most probable one. Moreover a combination of mobility model with a physical model may allow development of more accurate handover prediction algorithms. In more advanced approaches, the probability of handover could be obtained by a network node using a self learning process over time, based on evolution of the model and a combination of location, direction, speed and node degree history data.

In one embodiment the performance of the generated algorithm is based on an assessment of cell overlap. Various other factors may be used in order to determine fitness of a generated algorithm, for example, cell coverage may be used as a performance indicator. It will be appreciated that cell coverage would ideally be maximised. If cell overlap is used as a fitness function or performance function it may advantageously be minimised. A variety of performance characteristics may be used by themselves or in combination and including, for example, coverage, overlap, load (which may advantageously be balanced), dropped calls, and handovers.

In one embodiment, the determining logic is operable receive a signal from at least one other network node and the step of creating a model comprises and calculate, from the received signal using a radio path signal propagation model, an indication of distance to at least one other network node from the deployed base station:

In one embodiment, the received signal received from the at least one other network node comprises an indication of the transmission power of the signal from the other network node and an indication of received power of the signal from the other network node at the deployed base station.

In one abstraction, cell interference on a real live deployment can be modelled using a free space propagation law. Using such a model, for any given base station transmitting at a given power, and for every point within which that transmission can be received it is possible to compute a mutual distance from that point from that given base station. It is possible to do that using only an indication of perceived power. It will be appreciated, that a real scenario propagation does not work in the same way as the propagation of a wave increased base since obstacles, multipath affects, and other propagation issues come in to play. Nonetheless, the free space model offers an indication of propagation between any two points within a wireless network. In effect, using free space propagation characteristics allows computation of equivalent distances from a knowledge only of transmitted and received power from a network node, those two values being easily obtained through direct measurements.

In one embodiment, the received signal received from the at least one other network node comprises receiving an indication of the distance between the at least one other network node and a further other network node.

In one embodiment, the network node may be operable to receive information regarding deployed base station operating condition based on information fed back to the network node by users roaming within a wireless communication network. Accordingly, an abstract model according to the first aspect may be adapted one the basis of feedback received from user equipment. That feedback may come in many forms, for example, statistics indicated a large number of dropped calls in an area which, according to the simplified model is supposedly well covered, or user equipment reporting high interference in areas supposedly with little overlap. A mathematical model of the environment can be adapted to take into account such user feedback. One example is a case in which received power from a base station at the network node is smaller than the threshold on which communication can be established. In such a scenario, a network node itself may not be able to calculate a likely existing overlapping area since the existence of another network node cannot be fully detected. However, when user equipment works through an overlapping area it may be able to communicate with both deployed base station and a neighbouring node. Thus, the knowledge of transmitted and received powers of network nodes (base stations) at the user equipment, may allow the calculation of equivalent distance to nonetheless be carried out provided appropriate information is sent to the network node. It may, for example, be the case that user equipment is able to calculate and report distances itself having been located in an overlap area between base stations.

In one embodiment, the assessment logic is operable to use the calculated indication of distance to calculate a cell overlap between a coverage area of the deployed base station and the coverage area of the at least one other network node for the algorithm's proposed adjustment of the deployed base station operating conditions. Accordingly, if, for two cells in a configuration, an equivalent distance, based on the free space propagation model is calculated, then it is possible to define an equivalent overlap area which may be obtained through simple Euclidean geometry making computation of that overlap significantly lighter than a real world model.

In one embodiment, the assessment logic is further operable to compare the calculated overlap according to an algorithm's proposed adjustment of the deployed base station operating conditions, with a calculated overlap according to current deployed base station operating conditions. Furthermore, the assessment logic may, in one embodiment, be further operable to compare the calculated overlap according to an algorithm's proposed adjustment of the deployed base station operating conditions, with a calculated overlap according to another algorithm's proposed adjustment of deployed base station operating conditions

A second aspect provides a method of generating, by adaptive programming, an algorithm for adjusting deployed base station operating characteristics to assist in providing desired base station operating characteristics; the method comprising the steps of:

   determining at least one deployed base station operating condition;
   creating a model of at least one indication of deployed base station operating environment from the determined deployed base station operating condition;
   generating at least one algorithm which determines whether to adjust the deployed base station operating characteristics for any particular base station operating environment; and
   assessing performance of the generated algorithm's ability to adjust the deployed base station operating characteristics towards the desired base station operating characteristics using the created model of deployed base station operating environment and determine whether a desired performance level has been achieved.

In one embodiment, the step of determining comprises receiving a signal from at least one other network node and said step of creating a model comprises calculating, from the received signal using a radio path signal propagation model, an indication of distance to said at least one other network node from the deployed base station.

In one embodiment, the received signal received from the at least one other network node comprises an indication of the transmission power of the signal from the other network node and an indication of received power of the signal from the other network node at the deployed base station.

In one embodiment, the received signal received from the at least one other network node comprises receiving an indication of the distance between the at least one other network node and a further other network node.

In one embodiment, the step of assessing performance of the algorithm to adjust the deployed base station operating conditions comprises the step of using the calculated indication of distance to calculate a cell overlap between a coverage area of the deployed base station and a coverage area of the at least one other network node for the algorithm's proposed adjustment of the deployed base station operating conditions.

In one embodiment, the step of assessing performance of the generated algorithm's ability to adjust the deployed base station operating conditions towards the desired base station operating conditions further comprises the step of comparing the calculated overlap according to a generated algorithm's proposed adjustment of said deployed base station operating conditions, with a calculated overlap according to current deployed base station operating conditions.

In one embodiment, the step of modelling at least one indication of deployed base station operating environment further comprises the step of generating an equivalent environment model in the form of a directed graph G(N,A) composed of N nodes and A arcs.

In one embodiment, each node represents a network node, one of which is the deployed base station, and each network node is associated with one or more node attribute, indicative of deployed base station operating environment.

In one embodiment, the node attributes comprise one or more of: number of users connected to a network node, number of users leaving a network node, transmission power of a network node, number of network node detected dropped calls, network node traffic characteristics.

In one embodiment, the network nodes are connected by one or more directed arcs each being associated with one or more arc attribute, indicative of deployed base station operating environment.

In one embodiment, the arc attributes comprise one or more of: equivalent distance between network nodes, real distance between network nodes, number of network node neighbours, number of users flowing between network nodes, overlapping coverage area along the arc.

In one embodiment, the determining step comprises determining one or more parameters related to user mobility within an area served by the deployed base station.

In one embodiment, the creating step comprises the step of creating a mobility model indicative of the deployed base station operating environment.

A third aspect provides a computer program product operable, when executed on a computer, to perform the method of the second aspect.

Further particular and preferred aspects are set out in the accompanying independent and dependent claims. Features of the dependent claims may be combined with features of the independent claims as appropriate, and in combinations other than those explicitly set out in the claims.

BRIEF DESCRIPTION OF THE DRAWINGS

Embodiments of the present invention will now be described further, with reference to the accompanying drawings, in which:

Figure 1 is a schematic representation of a network for wireless telecommunications according to one embodiment;
Figure 2a is a schematic representation of a telecommunications network;
Figure 2b is a weighted directed graph representation of the telecommunications network shown in Figure 2a;
Figure 3 illustrates schematically the free path propagation model;
Figure 4 illustrates schematically calculation of cell overlap using an equivalent distance model;
Figures 5a, 5b and 5c illustrate schematically an application of abstract modelling to represent a real scenario;
Figure 6 illustrates graphically a comparison of a real world and equivalent model approaches;
Figure 7a and Figure 7b illustrate the maximum and mean fitness comparison for real world and equivalent model systems over 100 generations, for the same situation as that illustrated in Figure 6;
Figure 8 illustrates schematically a method of updating a simplified equivalent system model according to one embodiment;
Figure 9a illustrates schematically the main components of a network node according to one embodiment; and Figure 9b illustrates schematically a genetic programming process.

DESCRIPTION OF THE EMBODIMENTS

An example wireless network and operation of a network node will now be described, before focusing on an embodiment of a network node and its operation.

In wireless networks, use of a large number of user-deployed small cells allow high data rates and provide high capacity. Such small cells typically in the range of tens or hundreds of metres, and are often referred to as femtocells, microcells or picocells. However, a side effect of using such a large number of small cells is the diversity of environments in which the base stations providing those cells would experience.

Throughout the description the term algorithm is used to mean a set of rules or a method that is used to solve a problem or to perform a task. An algorithm may be specified in the form of the mathematical formula having a technical application, a computer programme, a representation of a system's behaviour, or a flowchart. Examples of algorithms in telecommunications network nodes are: a method to automatically adjust the coverage area of your radiocell, and a method of routing traffic through a network router node.

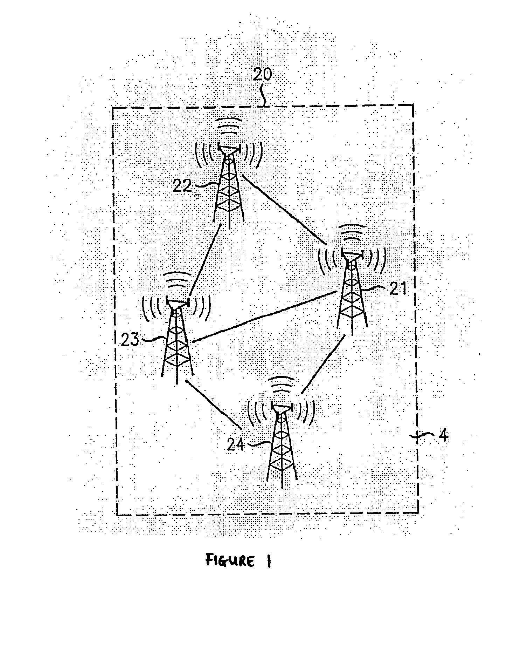

As shown in Figure 1, a telecommunications network 20 includes a radio access network 4 which includes some interconnected cellular base stations 21, 22, 23, 24. The base stations 21, 22, 23, 24 all run respective algorithms to perform a predetermined task. Each of the base stations includes a respective programming unit 10 which is used to provide improved versions of an algorithm using adaptive programming techniques, as explained in more detail below. Each of the base stations may be operable to communicate with and sense, neighbouring base stations. For example, a first base station 21 may be operable to communication with and sense neighbouring base stations 22, 23, 24. Typically, an environment model would be generated and stored in programming units 10. Traditionally, that model is generated manually. In order to obtain results that are optimised for a specific deployment scenario, a high level of information regarding the surrounding environment is required. That information is difficult and time expensive to collect: for instance, in order to obtain an estimate of the average overlap of neighbouring cells, in addition to base station configuration the following information may be required, including, for example, a precise map of the area in which the base station is located, a knowledge of all of the construction materials used around the base station, the relative propagation behaviour of those construction materials, and an accurate wave propagation model including attenuation interference multiple path and other effects.

User mobility is another determining factor in the accuracy of the model preloaded onto base station 21. It would be understood that the same geographical scenario, for example, a building, may have different optimal solutions depending on the number of users and of their mobility patterns.

Embodiments described herein aim to automatically build an abstract model of relevant parameters in the objective function that can be computed and evolved based only on information that can be directly measured and/or computed by the base stations themselves, either independently or in co-operation. Such abstract models allow an automatic evolution process to test offline a new generation of algorithms, created using adaptive programming. The test of those adaptively created algorithms uses abstract models that represent the environment of the deployment. As a result, the adaptively created algorithms may be highly optimised for each specific deployment, whilst not expending significant manpower on creating an internal model for an internal model which is stored in each programming unit 10. The model self-created by each base station will be highly optimised for each specific deployment, yet operates as an abstraction of the real life environment in which a base station is deployed.

Embodiments therefore enable the automatic generation of an abstract model and adaptation of that abstract model to the environment in which the network is deployed in the real world, the abstraction being based on available measurements. The automatic creation and generation of the abstract model is a key component for self-learning and self-evolving coverage optimisation algorithms.

Development of precise models of the environment and users, which reliably replicate reality is generally achieved by putting together two main elements: a physical model and a mobility model. Physical modelling involves analysis and tracking of wave propagation in the real life environment in order to understand signal characteristics including, for example, integrity, interference, signal to noise ratio etc. Such physical model requires understanding and complete modelling of the physics of radio waves and propagation characteristics, and of the radio signalling protocol and the radio frequency equipment being used in a particular deployment. In particular, there is also a need for a deep knowledge of the environment the exact position of all obstacles including walls, trees and cars, the wave behaviour in that environment including the interference reflection attenuation and dielectric constant in the surrounding area and the position of all signal sources to name but a few.

Mobility modelling of a real life deployment requires modelling and tracking users moving into an environment and interacting with a set of base stations. It typically requires knowledge of the exact position and behaviour of each user within a network. It can be understood that the number of users can be hundreds or thousands in an outdoor scenario.

Such a real world model created using intensive measuring and experimental techniques is typically used in a traditional network to compute the value of a given objective function or programme. That function estimates the fitness or goodness of a solution in terms of how effective the adaptively created algorithm is in the real world. If the approach gives a requite value of objective function, then a base station is operable to adopt a new objective function to adopt the new solution and implement it. Such an approach such of feedback loop is common to all adaptive approaches for including incremental, heuristic, evolutionary and machine learning processes for example. The objective functions are usually computed by an analysis of the real life scenario, based on both the physical and mobility models created and thus the precision of the model is of paramount importance.

Such a detailed model requires a huge amount of information and it will be appreciated that such a model is particularly difficult and expensive to obtain, makes simulation complexity immense, and the model itself is intrinsically centralised. For example, for a number of small cell scenarios such as that depicted in Figure 1, it would not be typical to create a basis model for each base station but rather to use a standard model preloaded or centrally held which can then be tweaked and adapted by local measurement. Such an approach does not match a small cell deployment scenario particularly well, since creating a real world model, and expending large amounts of effort and money on creation of that model, does not match the need of plug and play off the shelf components required by an end user with little or no intervention from a provider.

Having a larger wealth of information which is difficult and expensive to obtain does not match with the small cell deployment model based upon autonomous adaptation of cells after their deployment. If simulation complexity is huge, for example, the required computational resources are large and has a large impact on the cost of a small cell. Similarly, centralisation requires specific additions to infrastructure which may itself have a negative impact on costs. For example, overlap estimation requires knowledge of the status of each cell thereby intrinsically centralising such a calculation if using a completely real world model.

Embodiments aim to reduce the overall complexity of the problem by developing an abstract equivalent model of surrounding environment of a base station. The abstract equivalent model must be generated and created from direct measurements obtained during a normal operation of small cells in a real environment. An example of a parameter which can be of use in creation of an abstract model may, for example, include "equivalent distance" explained in more detail below. Other parameters may also be used to generate, or refine, an abstract model. The "equivalent distance" parameter is calculated using a neighbour's discovery technique and a given path propagation model for example, a free space path propagation model.

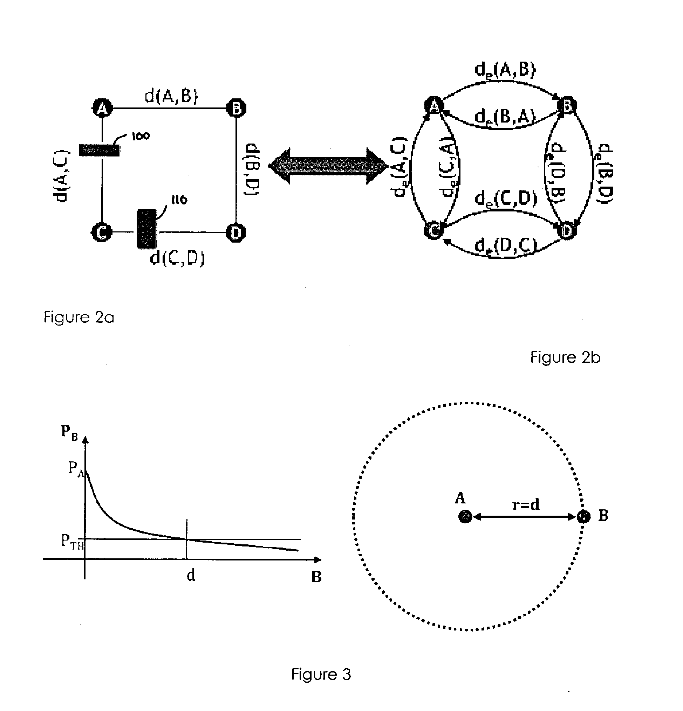

Figure 2a illustrates schematically a telecommunications network including four base stations a, b, c, d and two walls 100, 110. The walls affect propagation of radio waves between base stations. The walls are physically located between base stations c and d and also between base stations c and a.

Figure 2b illustrates schematically an equivalent model of the telecommunications network shown in Figure 2a created according to one embodiment. The schematic representation of Figure 2b is based on equivalent distance and takes the form of a weighted directed graph representation of the system. Creation of that directed graph model is described in more detail below. A graph model can be used to successfully model a variety of parameters, such as cell overlap and user mobility characteristics. Those parameters may be used within an automatic evolution of self-x algorithms in autonomous networks. Use of a simplified model allows more computational iterations of self-x algorithms, and by virtue of faster computation may correct error introduced by the simplification introduced by not using a real world model. A simplified model may also leave enough computational resource to adapt the model itself, so that over time a self-x algorithm generated using the model becomes more precise.

Creation of Directed Graph Representation of System

Technically, in order to implement one embodiment, one of base stations a, b, c, d, for example a, shown in Figure 2a, transmits a radio signal at a maximum transmission power, identified by means of a particular identifier, for example, a cell id. That signal is transmitted for a predetermined period of time. Neighbouring base stations, b, c, d, measure the received power from base station a and, using an appropriate transmission equation, for example, the Friis transmission equation, are operable to calculate the relative equivalent distance from transmitting base station a. Such values can be stored on the small cells a, b, c, d, or exchanged within the small cell cluster a, b, c, d. Furthermore it is possible for those values to be reported to a central optimisation node.

According to the equivalent model approach, as illustrated in Figures 2a and 2b, cell interference in a real deployment is modelled using free space propagation laws.

In an equivalent model approach, cell interference on a real deployment can be modelled using free space propagation laws. Figure 3 illustrates schematically the free path propagation model. A base station A transmits a signal with frequency f and transmit power $P_A$. According to the free space propagation law illustrated by the graph of Figure 3, the power $P_{AB}$ received at a given point B is inversely proportional to the square of the distance d (Friis transmission equation):

$$P_{AB} = k^2 \frac{P_A}{d^2}$$

where $k = \dfrac{c_0}{4\pi f}$, with $c_0$ being the speed of light in vacuum.

Once the minimum power threshold $P_{TH}$ to achieve coverage is determined for user equipment in the geographical area served by base station A, all points where interference with A is possible can be considered to be contained in circle centred on the location of base station A and of ray r, as shown schematically in Figure 3.

The same procedure may be adapted to calculate the equivalent distance between a small cell and a mobile phone or an equivalent distance between a pair of mobile phones. In the most general case, equivalent distance can be evaluated between any pair of transmitting/receiving entities.

Cell Overlap

The equivalent distance model in accordance with one embodiment may, for example, be used to estimate overlap between cells. It will be understood that cell overlap in a wireless communication network is advantageously minimised although some overlap is necessary in order to maintain coverage within an area. The overlap between neighbouring cells is an important measure in the coverage optimisation process. In small cell deployments, which operate on the same carrier as existing macro cell deployments in the transmicrocell deployments, the transmit power of the small cells is advantageously minimised to minimise interference to the macro layer. Such an arrangement can be achieved by minimising coverage overlap that is to say that excess transmit power that does not improve small cell coverage. It will be understood that some overlap between neighbouring small cells is required to provide continuous coverage. In a traditional simulations scenario, involving a complete real world model, an estimation of overlap is computationally intensive. The model and simulation must model the propagation patterns of each cell transmission, and go on to identify areas where signal interference is higher than a certain threshold. Such real world modelling requires burdensome computation over a highly precise model.

Mathematically, generation of an equivalent distance between transmitting/receiving entities allows the creation of an abstract representation of a real world scenario as a directed graph G(N,A) composed of N nodes and A arcs. In the most general case, not limited to equivalent distance, each node, or vertex, $n_i \in N$ represents a small cell base station and, as shown below:

$$n_i \quad \begin{cases} \bullet\text{attribute\_1} \\ \bullet\text{attribute\_2} \\ \bullet\text{attribute\_3} \\ \bullet... \end{cases}$$

can be defined by one or more of its global attributes, such as:

- name ID
- real space coordinates
- "equivalent" space coordinates
- Forward and Backward stars
- and more...

and through problem related attributes, like for example:

- number of connected users
- number of arriving/leaving users

- transmission power
- number of detected drop calls
- traffic characteristics (number of handled calls, amount of traffic,...)
- and more...

The nodes can be connected by one or more directed arcs, or links, $a_k \equiv (n_i, n_j) \in A$

$$n_i \xrightarrow{\begin{array}{c} \bullet\text{attribute\_1} \\ \bullet\text{attribute\_2} \\ \bullet\text{attribute\_3} \\ \bullet... \end{array}} n_j$$

each arc defined by its global attributes, such as:

- name ID
- tail end node $n_i$
- head end node $n_j$
- equivalent distance
- neighbours list
- and more...

and through problem related attributes, like for example:

- real distance (if available)
- number of users "flowing" along the arc
- overlapping area along the direction defined by the arc
- and more...

The graph model, mathematically defined above, an example of which is schematically illustrated in Figure 2b, can be used to successfully model a variety of parameters such as cell overlap or user mobility characteristics as required for the automatic evolution of self-x algorithms in future autonomous networks. The abstract model, though a simplification of the real world, allows on the one hand more iterations (therefore correcting the error introduced by the simplification) and on the other hand leaves enough computational resource to adapt the model itself, so that over time it may become more precise.

Overlap Estimation using Equivalent Distance

The overlap between radio coverage being offered by adjacent base stations, is the overlap between neighbouring cells, and offers an important measure in the network coverage optimization process. In small cell deployments (for example, those supported by femto base stations) which operate on the same carrier as existing macro-cell deployments, the transmit power of the small cells may be minimized to minimize interference to the macro layer. Minimisation of transmit power can be achieved by minimizing the coverage overlap (i.e. the excess transmit power that does not improve the small cell coverage) between cells. Some overlap between neighbouring small cells is, however, required to provide continuous coverage to user equipment being served by the network. If cell overlap is zero, there is a high likelihood that a call will be dropped when transitioning between cell coverage areas. In a traditional simulation scenario, an estimation of cell overlap is computationally intensive: the simulator must model the propagation patterns of each cell transmission, and identify the areas where signal interference is higher than a certain threshold. This requires burdensome computation over a highly precise model.

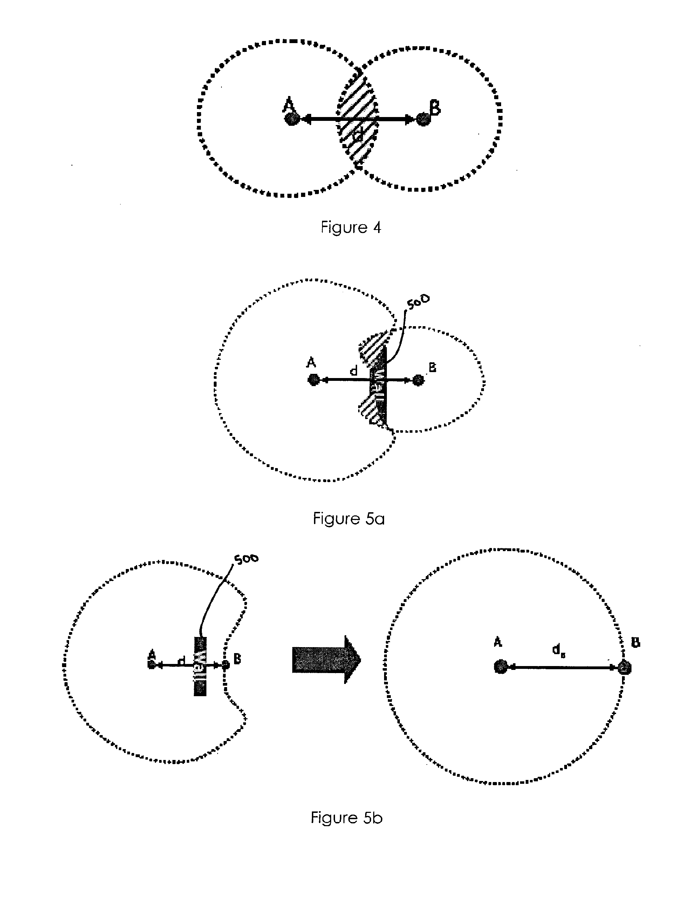

The computation of overlap between two cells using an equivalent distance abstraction model can thus be reduced to a purely geometrical problem, as depicted in Figure 4.

Figure 4 illustrates schematically calculation of cell overlap using an equivalent distance model. The minimum power threshold $P_{TH}$ to achieve coverage for base station A has been determined to be equivalent to distance $r_A$. Similarly, The minimum power threshold $P_{TH}$ to achieve coverage for base station B has been determined to be equivalent to distance $r_B$ . Since $d \leq (r_A + r_B)$, gives the overlap area (shaded in Figure 4), the overlap can be computed based only on the transmit powers $P_A$, $P_B$, the threshold $P_{TH}$ and the distance $d$.

Furthermore, for a given cell A transmitting at power $P_A$ and for every point at which base station B is located closer than r, it is possible to compute their mutual distance $d(A,B)$ just from the received power $P_{AB}$.

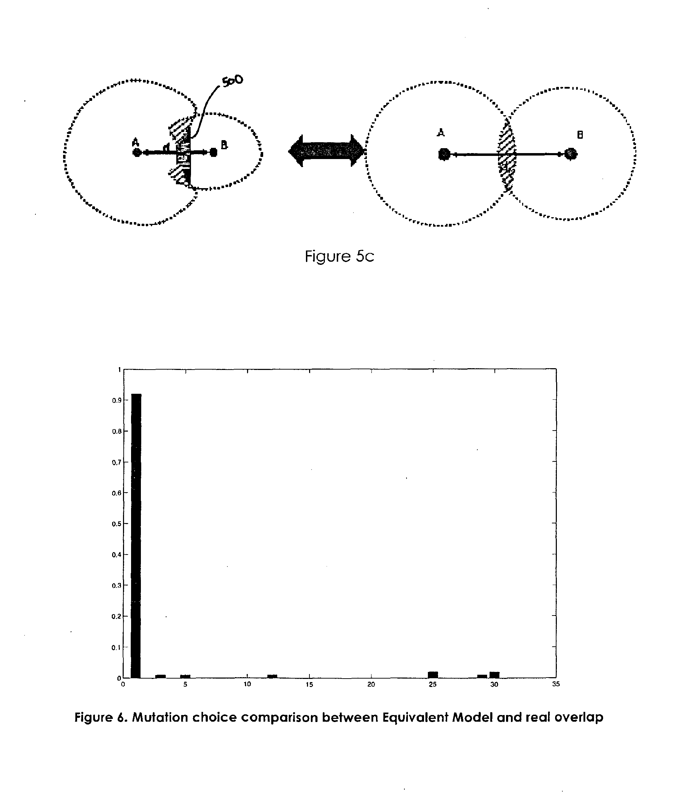

Figures 5a, 5b and 5c illustrate schematically an application of abstract modelling to represent a real scenario.

Figure 5a illustrates schematically the propagation of radio coverage between two base stations A and B. A wall, 500 is located between base stations A and B. Since an obstacle exists (in this case a wall) and because of , for example, multi path effect and interference, the interference area of a base station is typically not a perfect circle. Figure 5a shows such scenario: the wall 500 between A and B changes the attenuation factor, and the overlap area (shaded) is smaller than it would be in free space. The propagation pattern illustrated in Figure 5a is only indicative, and in reality it could be much more complicated.

In accordance with embodiments, for every two cells in a configuration such as that shown in Figure 5a, an equivalent free space propagation model is derived. To take into account the obstacles, an equivalent distance $d_e$ is computed for each pair of cells in a network.

If A is a cell transmitting at power $P_A$, B is a second cell, receiving the signal $P_{AB}$ from A, and $d(A,B)$ is the real distance between the cells, then the equivalent distance $d_e(A,B)$ is defined as the distance A and B would be in free space, so that the transmitted power $P_A$ gets attenuated to $P_{AB}$. Figure 5b shows schematically the concept of equivalent distance. Since the wall attenuates the signal, the base stations effectively appear to be further apart.

The effective distance is given by:

$$d_e(A,B) = k \cdot \sqrt{\frac{P_A}{P_{AB}}}$$

If the equivalent distance is computed for both transmitting cells, it is possible to define also the equivalent overlap area, as shown in Figure 5c. This area can be easily calculated through Euclidean geometry, making the computation much lighter. Moreover, the computation of equivalent distance only requires the knowledge of transmitted and received power, two values easily obtained through direct measurements. The Euclidean evaluation of the intersection of the two circles is a function of the distance between the centres (the equivalent distance) and the radii of the two circles (given by the power threshold of each base station). Knowledge of the two equivalent distances (one for each propagation direction) allows evaluation of overlap areas.

The equivalent model is not symmetric, i.e. $d_e$ (A,B) can be different from $d_e(B,A)$. Propagation is not always symmetrical due to a series of physical effects, for example, multiple paths, reflection, polarization and similar.

The equivalent model does not conserve topology. For instance, if A,B,C for a triangle with sides AB, BC, CA, the three equivalent distances $d_e(A,B)$, $d_e(B,C)$, $d_e(C,A)$ won't form a triangle. In other words the triangular inequality may not be satisfied.

As a result, the equivalent model can be considered to be a weighted directed graph representation of the system, where the weight is the equivalent distance, as shown in Figure 2b. Algorithms can be applied to this graph, whose solutions can then be applied to the real system.

The significance of an equivalent model abstraction used in combination with an adaptive algorithm creation technique can be best understood by considering that although values computed using the equivalent model (e.g. overlap estimation from the model of Figure 5c) will generally have a high error margin and their absolute value can be far from the real one, a useful equivalent model should show the same trend in optimisation function when subjected to a self-x algorithm iteration.

In an overlap optimisation self-x algorithm, a base station may have two possible configurations, C1 and C2. For each configuration, the real-life system objective value (i.e. the overlap area) can be computed: Obj (C1) and Obj(C2). For adaptation purposes, that is, assessing the usefulness of a generated algorithm iteration, the important value is the delta between the two solutions, i.e. $\Delta$ = Obj(C2)-Obj(C1). If it is positive, the adaptation is kept, otherwise it is discarded.

C1 and C2 will give a value in the objective function when the equivalent model is used, $Obj_{Eq}(C1)$ and $Obj_{Eq}(C2)$. While most likely $Obj_{Eq}(C1) \neq Obj(C1)$ and $Obj_{Eq}(C2) \neq Obj(C2)$, the sign of $\Delta e = Obj_{Eq}(C2)-Obj_{Eq}(C1)$ should be the same as for $\Delta$. As a result, the adaptation can be driven in the same direction, but based on the much simpler computations of the equivalent model.

An abstraction model, based on equivalent distance, has been used to calculate the overlap areas in a previously used small cell office simulation scenario. In turn, this model, as part of a fitness function, has been used to drive a genetic programming approach in the coverage optimisation process.

The obtained solutions have been compared with those resulting from available measured values of the real scenario in order to validate the equivalent model.

Figure 6 illustrates graphically a comparison of a real world and equivalent model approaches. The graph illustrates the evolution choice comparison between the equivalent model and the real overlap is shown. The x axis relates to the number of mutation created by an adaptive process (in this case, genetic programming) and the y axis relates to the correlation between the best generated algorithm in the equivalent model correlating with the best generated using the real world model. The graph illustrates that, at each generation of the genetic process, the best individuals (best algorithms in this particular implementation) are chosen to generate new children. As shown in Figure 6, the choices made based on the equivalent model match by around 90% those made based on the real scenario.

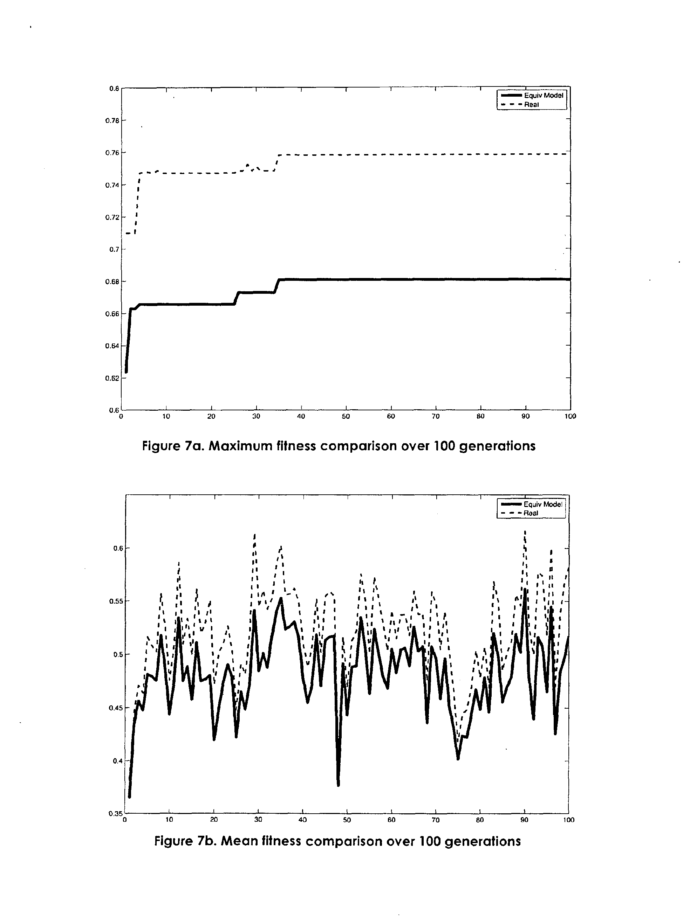

Figure 7a and Figure 7b illustrate the maximum and mean fitness comparison for real world and equivalent model systems over 100 generations, for the same situation as that illustrated in Figure 6.

Figure 7a illustrates for a real world model (dotted line) and an equivalent model (solid line) a maximum fitness achieved over 100 generations of adaptive programming algorithm adaptations. The trend of the maximum fitness related to the equivalent model follows that of the real scenario.

Figure 7b is a graph which illustrates for a real world model (dotted line) and an equivalent model (solid line), a mean fitness of the mutations produced across over 100 generations. The graph shows that for each generation, the sign of the first derivative of the average fitness calculated using the equivalent model largely matches that related to the real scenario (in other words the mean of the fitness function has the same behaviour over time).

Model Adaptation ($d_e$ update)

The previous embodiment showed how a simplified equivalent model can be used to drive the adaptation of a real system, as long as the deltas of the objective functions have the same polarity. If an equivalent model is too simplified, even trend matching could represent an issue. In further embodiments, the model can be automatically adapted based on feedback. That feedback may originate at user equipment and may, for example, include: statistics indicating a large number of dropped calls in a area supposedly well covered; users reporting high interference in areas supposedly which have little overlap, and similar.

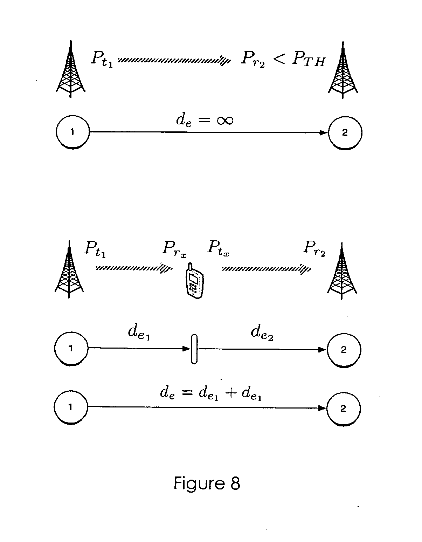

In embodiments, the model can be adapted to take into account feedback. Figure 8 illustrates schematically a method of updating a simplified equivalent system model according to one embodiment. As shown, the received power $P_r$ on a given cell at a given point may be smaller than the threshold $P_{TH}$. In this case, the equivalent distance $d_e$ cannot be calculated by base stations located further away from the first base station that the distance associated with $P_{TH}$ and the likely existing overlapping area can not be "detected" by the equivalent model. However, when a user walks through the overlapping area, the user equipment will be able to communicate with both cells. Therefore the knowledge of transmitted and received powers of cells and the user equipment, allows the calculation of $d_e$.

More sophisticated approaches involve modification of the graph itself, such approaches may allow, for example, the introduction of "discontinuity nodes" which can be used to model walls; parameters to balance the influence of cells in the computation of the objective function (i.e. overlap area), which can be used in highly asymmetrical situations (ex: $P_A >> P_B$), and other similar modifications. Such adaptations may be computed by a central node or locally obtained by distributed nodes.

Model Extensions

In all previous embodiments the equivalent model was computed based on a single parameter, the equivalent distance. It is also possible to introduce additional parameters to enrich the model and make the equivalent objective function closer to the original objective function. The additional parameters could be additional weight on the graph branches, or scalar values assigned to each node. For example, such parameters could include:

> 1) number of observed handovers from one cell to another,
> 2) number of users registered in a cell
> 3) degree of a cell (number of discovered neighbours)
> 4) and similar

1) would be a weight on a connecting arc, 2) and 3) may be represented by scalar values, on a node that could be used in a varieties of ways in the objective function.

The number of observed handovers from one cell to another, for instance, could help determine the mobility patterns of user equipment within a network and identify any potential bottlenecks. The number of users registered in a cell could be used to correct the coverage area of the cell, enlarging it (by transmitting at higher power) if the user count is low, and reducing it if the cell is overloaded. The degree of a cell could be used to identify the probability of handover of each node in order to create a statistical mobility pattern.

These extensions and adaptations are obtainable for a real system, and can of course be subject to adaptation over time.

Mobility Modeling

A special case of model extension is the modelling of user mobility. As mentioned above, the behaviour of the users can be a determining factor for reaching an optimal network solution. Traditional schemes use "a priori" mobility models for the users, which are made to move inside the physical scenario, and then used to measure the parameters needed for the objective function.

In a real small cell deployment there is typically scant knowledge of the real environment and so it can be difficult to determine which a-priori mobility model matches the problem best.

However, base stations have the capability to measure a number of parameters directly linked to user mobility, such as, for example,

- the load of each cell (i.e., number of users in a certain area);
- inbound handover events (users entering an area);
- outbound handover events (user leaving an area); and
- "directional handovers" (as correlation of the previous two parameters: users leaving an area to enter another one)

In the equivalent model, these parameters can be considered to build a mobility model adapted to the real scenario. Many techniques can be used to gather the relevant data, including, for example, statistical analysis, machine learning, and pattern recognition, the approach chosen depending on the available performances and on the required precision.

One embodiment allows an estimate of $P_{HO(a,b,t)}$, the probability of having an handover from cell a to cell b at a time t to be modelled.

In a simple case, this can be obtained collecting handovers/drop calls history data over a time measuring interval $T_M$, and extracting the relative probability distribution (occurrence, variance), thereby creating very basic user behavioural patterns.

In addition, information on the degree of each cell (number of incoming/outgoing arcs) can be used to calculate the probability distribution of all possible next cells, identifying the most probable one.

A combination of both the mobility model and the coverage estimation allows the development of more accurate handover prediction algorithms. In more advanced approaches, $P_{HO}$ could be obtained using a self learning process over time based on the evolution of the model and on the combination of location/direction/speed/node degree history data.

An accurate prediction model is extremely useful to optimise the node power consumption, to minimise handover latency, and to improve the QoS (Quality of Service) pre-configuring the resources needed for a given service.

Therefore mobility modelling complements the coverage overlap estimation, and can create an equivalent model detailed enough to be used within an optimisation process estimating the "goodness" of "fitness" of new mutations generated by, for example, a genetic programming approach, before those mutations are applied to the real system.

The mobility model creation process is not intrinsically centralised, and can thus be used in distributed approaches where each cell estimates the transition probability to/from its neighbours and uses it for its independent evolution process.

Network Node including Abstract Modelling Unit

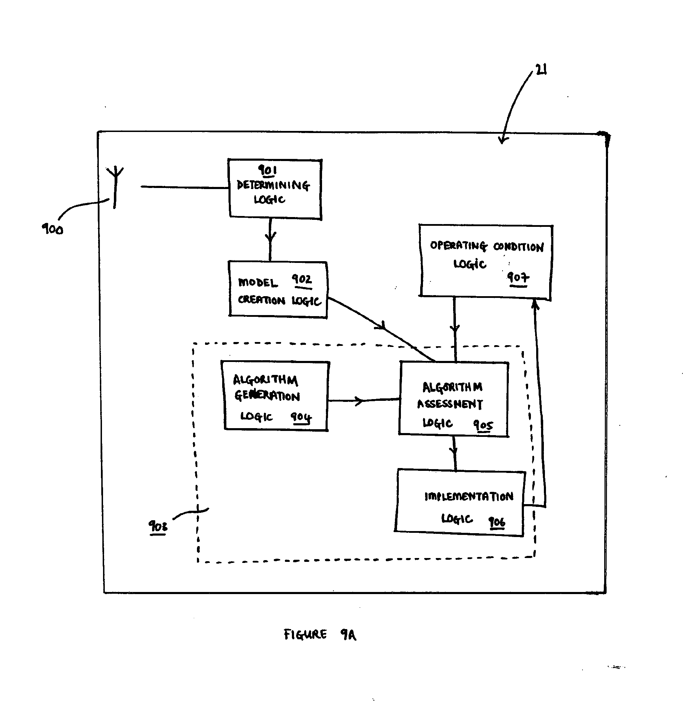

Figure 9a illustrates schematically the main components of a network node according to one embodiment. As shown in Figure 9a, base station 21 according to one embodiment comprises an antenna 900 determine logic 901, model creation logic 902 an adaptive programming unit 903 comprising algorithm generation logic 904, algorithm assessment logic 905 and implementation logic 906. Base station 21 further comprises operation condition logic 907.

In one embodiment, antenna 900 of base station 21 is operable to receive signals from surrounding base stations. In this embodiment antenna 900 is operable to receive signals which include information relating to the transmission power and the received power of a signal from another base station. Antenna 900 communicates with determining logic 901 to determine those features of that signal which indicate the status of base station 21 with operating condition. Determining logic 901 communicates with model creation logic 902 which operates on the basis of the received signal to create a model of deployed base station operating environment. In this embodiment, model creation logic 902 is operable to create and calculate an equivalent distance based on its knowledge of transmitted and received power. Base station 21 then operates to create a directed graph model based on equivalent distances calculated by model creation logic 902 on the basis of signals received by determining logic 901.

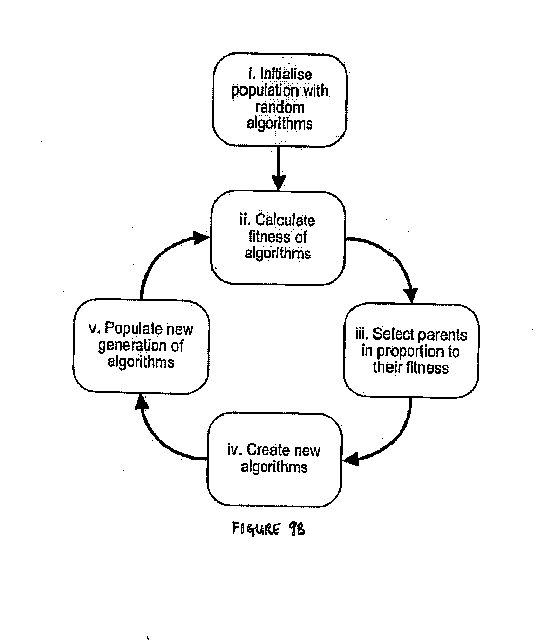

Adaptive programming unit 903 comprises algorithm logic 904 which operates to generate at least one algorithm which determines whether to adjust base station 21 operating characteristics for any operating environment. Algorithm generation logic can take many forms. An example of algorithm generation logic would be an implementation of genetic programming as described conceptually in relation to Figure 9b. Once a new algorithm has been generated by algorithm generation logic 904 that new algorithm needs to be assess for suitability of implementation. In all cases, it is hoped that algorithms generated will move base station 21 from current operating conditions towards a set of idea operating conditions that is to say that the purpose of algorithm generation is to self optimise a network. Algorithm assessment logic 905 communicates with the generation logic 904 and model creation logic 902 to assess the performance of generated algorithms and in particular to assess the generated algorithms ability to adjust base station operating conditions towards desired base stations operating characteristics. In order to do this algorithm assessment logic 905 uses the model generated by model creation logic 902 to assess either the difference between two potential algorithms or the difference between current operating conditions and operating characteristics received from operating condition logic 907, and a proposed view algorithm implementation. Algorithm assessment logic 905 determines whether a desired performance level or characteristic has been achieved, in this embodiment it may operate to determine whether an improvement in overlap has been issued and if so implementation logic 906 is operable to communicate with operating condition logic to change base station operating characteristics towards desired base stations operating characteristics.

Figure 9b is a diagram illustrating schematically a genetic programming process. As shown in Figure 9b, genetic programming (gp) generally involves the following steps:

As shown in Figure 1, genetic programming (GP) generally involves the following steps:

(i) initialise a population of algorithms- a population is the term used for a collection of individual algorithms, the algorithms in the initial population being generated at least somewhat randomly;
(ii) calculate the fitness of each of the algorithms in the population - fitness being the term used for a measure of the algorithms performance in achieving the task of the algorithm;
(iii) select algorithms to become "parents" based on their fitness;
(iv) create new algorithms by applying genetic operators, such as mutation and crossover to the parents selected in the previous step; and
(v) produce the next generation population of algorithms using newly created algorithms and survivors chosen from the previous generation population.

The above steps (ii) to (v) may be repeated until a termination condition is met (for example the process has gone through a set number of generations, or a target fitness level is met by an algorithm that has been created).

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

**Claims**

1. A network node operable to generate, by adaptive programming, an algorithm for adjusting deployed base station operating characteristics to assist in providing desired base station operating characteristics; said network node comprising:

    determining logic operable to determine at least one deployed base station operating condition;
    model creation logic operable to create a model of at least one indication of deployed base station operating environment from said determined deployed base station operating condition;
    generation logic operable to generate at least one algorithm which determines whether to adjust said deployed base station operating characteristics for any particular base station operating environment; and
    assessment logic operable to assess performance of said generated algorithm's ability to adjust said deployed base station operating characteristics towards said desired base station operating characteristics using said created model of deployed base station operating environment and determine whether a desired performance level has been achieved.

2. A network node according to claim 1, wherein said modelling logic is operable to generate an equivalent environment model in the form of a directed graph G(N,A) composed of N nodes and A arcs.

3. A network node according to claim 2, wherein each node represents a network node, one of which is said deployed base station, and each network node is associated with one or more node attribute, indicative of deployed base station operating environment.

4. A network node according to claim 3, wherein said node attribute comprises one or more of: number of users connected to said network node, number of users leaving said network node, transmission power of said network node, number of network node detected dropped calls, network node traffic characteristics, number of node neighbours and node load.

5. A network node according to any one of claims 2 to 4, wherein said network nodes are connected by one or more directed arcs each being associated with one or more arc attribute, indicative of deployed base station operating environment.

6. A network node according to claim 5, wherein said arc attributes comprise one or more of: equivalent distance between network nodes, real distance between network nodes, number of network node neighbours, number of users flowing between network nodes, overlapping coverage area along the arc.

7. A network node according to any preceding claim, wherein said determining logic is operable to determine one or more parameters related to user mobility within an area served by said deployed base station.

8. A network node according to any preceding claim, wherein said model creation logic is operable to create a mobility model indicative of said deployed base station operating environment.

9. A network node according to any preceding claim, wherein said determining logic is operable receive a signal from at least one other network node and said step of creating a model comprises and calculate, from said received signal using a radio path signal propagation model, an indication of distance to said at least one other network node from said deployed base station.

10. A network node according to claim 9, wherein said received signal received from said at least one other network node comprises an indication of said transmission power of said signal from said other network node and an indication of received power of said signal from said other network node at said deployed base station.

11. A network node according to claim 9 or claim 10, wherein said received signal received from said at least one other network node comprises receiving an indication of the distance between said at least one other network node and a further other network node.

12. A network node according to any one of claims 9 to 11, wherein said assessment logic is operable to use said calculated indication of distance to estimate a cell overlap between a coverage area of said deployed base station and said a coverage area of said at least one other network node for said algorithm's proposed adjustment of said deployed base station operating conditions.

13. A network node according to claim 12, wherein said assessment logic is further operable to compare said calculated overlap according to a said algorithm's proposed adjustment of said deployed base station operating conditions, with a calculated overlap according to current deployed base station operating conditions.

14. A method of generating, by adaptive programming, an algorithm for adjusting deployed base station operating characteristics to assist in providing desired base station operating characteristics; said method comprising the steps of:

determining at least one deployed base station operating condition;
creating a model of at least one indication of deployed base station operating environment from said determined deployed base station operating condition;
generating at least one algorithm which determines whether to adjust said deployed base station operating characteristics for any particular base station operating environment; and
assessing performance of said generated algorithm's ability to adjust said deployed base station operating characteristics towards said desired base station operating characteristics using said created model of deployed base station operating environment and determine whether a desired performance level has been achieved.

15. A computer program product operable, when executed on a computer, to perform the method of claim 14.

**Amended claims in accordance with Rule 137(2) EPC.**

1. A base station (21) operable to generate, by adaptive programming, an algorithm for adjusting deployed base station (21) operating characteristics to assist in providing desired base station operating characteristics, said desired base station operating characteristics corresponding to a desired performance level; said base station comprising:

determining logic (901) operable to determine from direct measurements at least one deployed base station (21) operating condition indicative of said deployed base station environment;
model creation logic (902) operable to create an abstract environment model indicative of said deployed base station (21) operating environment from said determined deployed base station operating condition;
generation logic (904) operable to generate at least one algorithm which determines adjustments to said deployed base station operating characteristics for any particular base station operating environment; and
assessment logic (905) operable to assess performance of said generated algorithm's ability to adjust said deployed base station operating characteristics towards said desired base station operating characteristics using said created model of deployed base station operating environment and determine whether said desired performance level has been achieved.

2. A base station (21) according to claim 1, wherein said modelling logic is operable to generate an equivalent environment model in the form of a directed graph G(N,A) composed of N nodes and A arcs.

3. A base station (21) according to claim 2, wherein each node represents a network node, one of which is said deployed base station, and each network node is associated with one or more node attribute, indicative of deployed base station operating environment.

4. A base station (21) according to claim 3, wherein said node attribute comprises one or more of: number of users connected to said network node, number of users leaving said network node, transmission power of said network node, number of network node detected dropped calls, network node traffic characteristics, number of node neighbours and node load.

5. A base station (21) according to any one of claims 2 to 4, wherein said network nodes are connected by one or more directed arcs each being associated with one or more arc attribute, indicative of deployed base station operating environment.

6. A base station (21) according to claim 5, wherein said arc attributes comprise one or more of: equivalent distance between network nodes, real distance between network nodes, number of network node neighbours, number of users flowing between network nodes, overlapping coverage area along the arc.

7. A base station (21) according to any preceding claim, wherein said determining logic (901) is operable to determine one or more parameters related to user mobility within an area served by said deployed base station.

**8.** A base station (21) according to any preceding claim, wherein said model creation logic (902) is operable to create a mobility model indicative of said deployed base station operating environment.

**9.** A base station (21) according to any preceding claim, wherein said determining logic (901) is operable receive a signal from at least one other network node and said step of creating a model comprises and calculate, from said received signal using a radio path signal propagation model, an indication of distance to said at least one other network node from said deployed base station.

**10.** A base station (21) according to claim 9, wherein said received signal received from said at least one other network node comprises an indication of said transmission power of said signal from said other network node and an indication of received power of said signal from said other network node at said deployed base station.

**11.** A base station (21) according to claim 9 or claim 10, wherein said received signal received from said at least one other network node comprises receiving an indication of the distance between said at least one other network node and a further other network node.

**12.** A base station (21) according to any one of claims 9 to 11, wherein said assessment logic is operable to use said calculated indication of distance to estimate a cell overlap between a coverage area of said deployed base station and said a coverage area of said at least one other network node for said algorithm's proposed adjustment of said deployed base station operating conditions.

**13.** A base station (21) according to claim 12, wherein said assessment logic is further operable to compare said calculated overlap according to a said algorithm's proposed adjustment of said deployed base station operating conditions, with a calculated overlap according to current deployed base station operating conditions.

**14.** A method of generating, by adaptive programming, an algorithm for adjusting deployed base station operating characteristics to assist in providing desired base station operating characteristics; said desired base station operating characteristics corresponding to a desired performance level; said method comprising the steps of:

determining from direct measurements at least one deployed base station operating condition indicative of said deployed base station environment;

creating an abstract environment model indicative of said deployed base station operating environment from said determined deployed base station operating condition;

generating at least one algorithm which determines adjustments to said deployed base station operating characteristics for any particular base station operating environment; and

assessing performance of said generated algorithm's ability to adjust said deployed base station operating characteristics towards said desired base station operating characteristics using said created model of deployed base station operating environment and determine whether said desired performance level has been achieved.

**15.** A computer program product operable, when executed on a computer, to perform the method of claim 14.

FIGURE 1

Figure 2a

Figure 2b

Figure 3

Figure 4

Figure 5a

Figure 5b

Figure 5c

Figure 6. Mutation choice comparison between Equivalent Model and real overlap

Figure 7a. Maximum fitness comparison over 100 generations

Figure 7b. Mean fitness comparison over 100 generations

$P_{t_1}$ ⟿ $P_{r_2} < P_{TH}$

$d_e = \infty$

①  →  ②

$P_{t_1}$  $P_{r_x}$  $P_{t_x}$  $P_{r_2}$

①  $d_{e_1}$  →  ‖  $d_{e_2}$  →  ②

①  $d_e = d_{e_1} + d_{e_1}$  →  ②

Figure 8

FIGURE 9A

i. Initialise population with random algorithms

ii. Calculate fitness of algorithms

v. Populate new generation of algorithms

iii. Select parents in proportion to their fitness

iv. Create new algorithms

FIGURE 9B

Europäisches
Patentamt

European
Patent Office

Office européen
des brevets

## EUROPEAN SEARCH REPORT

Application Number

EP 10 36 0031

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 829 491 B1 (YEA JI-HAE [US] ET AL) 7 December 2004 (2004-12-07) * column 6, line 34 - column 7, line 44 * * column 8, line 19 - column 9, line 52 * * figure 3 * ----- | 1-15 | INV. H04W24/02 |
| X | US 2006/223546 A1 (CLAUSSEN HOLGER [GB]) 5 October 2006 (2006-10-05) * paragraph [0012] - paragraph [0014] * * paragraph [0052] - paragraph [0069] * * figures 4,5 * ----- | 1-15 | |
| A | WO 2009/115554 A1 (NOKIA SIEMENS NETWORKS OY [FI]; DOETTLING MARTIN [DE]; FAERBER MICHAEL) 24 September 2009 (2009-09-24) * the whole document * ----- | 1-15 | |
| A | EP 2 180 741 A1 (NOKIA SIEMENS NETWORKS OY [FI]) 28 April 2010 (2010-04-28) * the whole document * ----- | 1-15 | |

TECHNICAL FIELDS
SEARCHED (IPC)

H04W

The present search report has been drawn up for all claims

| Place of search | Date of completion of the search | Examiner |
|---|---|---|
| The Hague | 15 December 2010 | Brezmes Alonso, J |

EPO FORM 1503 03.82 (P04C01)

## ANNEX TO THE EUROPEAN SEARCH REPORT
## ON EUROPEAN PATENT APPLICATION NO.

EP 10 36 0031

This annex lists the patent family members relating to the patent documents cited in the above-mentioned European search report.
The members are as contained in the European Patent Office EDP file on
The European Patent Office is in no way liable for these particulars which are merely given for the purpose of information.

15-12-2010

| Patent document cited in search report | | Publication date | Patent family member(s) | | Publication date |
|---|---|---|---|---|---|
| US 6829491 | B1 | 07-12-2004 | NONE | | |
| US 2006223546 | A1 | 05-10-2006 | EP | 1864528 A1 | 12-12-2007 |
| | | | US | 2010093820 A1 | 15-04-2010 |
| | | | WO | 2006107555 A1 | 12-10-2006 |
| WO 2009115554 | A1 | 24-09-2009 | EP | 2120493 A1 | 18-11-2009 |
| EP 2180741 | A1 | 28-04-2010 | WO | 2010049354 A1 | 06-05-2010 |

EPO FORM P0459

For more details about this annex : see Official Journal of the European Patent Office, No. 12/82